# EUROPEAN PATENT APPLICATION

(11) **EP 4 682 813 A1**
(43) Date of publication of application: **21.01.2026**
(21) Application number: 24775263.7
(22) Date of filing: 15.03.2024
(51) Int. Cl.: G06Q 50/40, G06Q 50/26, G01S 19/01, H04W 4/02

(54) **CARBON EMISSION CALCULATION METHOD AND SERVER USING TRAFFIC DATA**

(30) Priority: 17.03.2023 KR 20230035177
(71) Applicant: WeDrive Co., Ltd., Incheon 22851 (KR)
(72) Inventor: YEO, Myung Ho, Incheon 22747 (KR); PARK, Hyoung Soon, Hwaseong-si, Gyeonggi-do 18466 (KR); KIM, Tae Young, Seoul 06284 (KR)
(74) Representative: Casalonga
(86) International application number: PCT/KR2024/095553
(87) International publication number: WO 2024/196218

(57) **Abstract**

The present invention relates to a method of calculating a carbon emission amount using transportation data and a server. The method of calculating a carbon emission amount using transportation data, according to an embodiment of the present invention, comprises: a first step in which a database collects and stores GPS information on a mobile terminal of a user who has boarded a transportation means; a second step in which a carbon emission amount calculation server calculates the carbon emission amount of the transportation means for each section of a road according to the GPS information on the basis of data stored in the database for each transportation means; and a third step in which the carbon emission amount calculation server corrects the carbon emission amount for each section according to a change in speed calculated using the GPS information of the transportation means, and provides the corrected carbon emission amount for each section to the mobile terminal.

## Description

### [Technical Field]

The present invention relates to a method of calculating a carbon emission amount using transportation data and a server, and more specifically, to a method of calculating a carbon emission amount using transportation data and a server that is capable of measuring a carbon emission amount without installing a separate carbon emission measuring device on a transportation means.

### [Background Art]

Including South Korea, over 200 countries around the world agreed in the 2015 Paris Climate Agreement to strive to limit the increase in global average temperature to no more than 1.5 degrees Celsius above pre-industrial levels in response to the climate crisis. Subsequently, in 2018, the United Nations' Intergovernmental Panel on Climate Change (IPCC) recommended that carbon neutrality need to be achieved by 2050 in order to maintain 1.5 degrees Celsius as the threshold. This is why "carbon neutrality by 2050" holds significant meaning in response to the climate change.

Recently, movements related to the prevention of global warming have been increasing, as evidenced by the growing number of countries joining the "2050 Carbon Neutrality Target Climate Alliance" aimed at achieving carbon neutrality.

As part of this trend, efforts to drastically reduce the amount of carbon dioxide emissions released into the atmosphere are actively progressing on a global scale, led by major advanced countries. Reducing the carbon dioxide emissions from automobiles is also part of these efforts.

Conventionally, a method has been used where the carbon dioxide emission amount from automobiles is measured and displayed so that a driver can directly monitor the emission state while driving, allowing the driver to be aware of the emission state and minimize the emission of carbon dioxide as much as possible.

However, this conventional technology is limited to automobiles used by individuals and does not provide the measurement of the carbon emission amount in accordance with various transportation means used by each individual.

### [Disclosure]

### [Technical Problem]

The present invention has been made in an effort to solve the above-mentioned problem. A method of calculating a carbon emission amount using transportation data and a server, according to the present invention, aim to collect movement data based on speed and position according to a transportation means and measure the carbon dioxide emission amount based on carbon emission coefficients for each transportation means, allowing for measuring the carbon emission amount without the need for a separate carbon emission measuring device.

### [Technical Solution]

To achieve the aforementioned object, there is provided a method of calculating a carbon emission amount using transportation data, according to an embodiment of the present invention, the method including: a first step in which a database collects and stores GPS information on a mobile terminal of a user who has boarded a transportation means; a second step in which a carbon emission amount calculation server calculates the carbon emission amount of the transportation means for each section of a road according to the GPS information on the basis of data stored in the database for each transportation means; and a third step in which the carbon emission amount calculation server corrects the carbon emission amount for each section according to a change in speed calculated using the GPS information of the transportation means, and provides the corrected carbon emission amount for each section to the mobile terminal.

According to an embodiment of the present invention, in the second step, the carbon emission amount calculation server may calculate the carbon emission amount of the transportation means for each section of a road according to the GPS information using a carbon emission coefficient for each transportation means on the basis of the data stored in the database for each transportation means.

According to an embodiment of the present invention, in the third step, the carbon emission amount calculation server may correct the carbon emission amount for each section using a carbon emission coefficient for a sudden stop, a sudden start, or sudden acceleration calculated using on the GPS information of the transportation means, and provide the corrected carbon emission amount for each section to the mobile terminal.

According to an embodiment of the present invention, the method may further include a fourth step in which the carbon emission amount calculation server corrects the carbon emission amount for each section according to a type of transportation means input by the user through the mobile terminal.

According to an embodiment of the present invention, in the fourth step, the carbon emission amount calculation server may provide a traveling report, configured by correcting the carbon emission amount for each section according to the type of transportation means input by the user through the mobile terminal, to the mobile terminal.

There is provided a system for calculating a carbon emission amount using transportation data, according to an embodiment of the present invention, the system including: a database configured to store data for each transportation means and collects and stores GPS information on a mobile terminal of a user who has boarded a transportation means; a carbon emission amount calculation server configured to calculate the carbon emission amount of the transportation means for each section of a road according to the GPS information on the basis of data stored in the database for each transportation means, correct the carbon emission amount for each section according to a change in speed calculated using the GPS information of the transportation means, and provide the corrected carbon emission amount for each section to the mobile terminal.

According to an embodiment of the present invention, the carbon emission amount calculation server may calculate the carbon emission amount of the transportation means for each section of a road according to the GPS information using a carbon emission coefficient for each transportation means on the basis of the data stored in the database for each transportation means.

According to an embodiment of the present invention, the carbon emission amount calculation server may correct the carbon emission amount for each section using a carbon emission coefficient for a sudden stop, a sudden start, or sudden acceleration calculated using on the GPS information of the transportation means, and provide the corrected carbon emission amount for each section to the mobile terminal.

According to an embodiment of the present invention, the carbon emission amount calculation server may correct the carbon emission amount for each section according to a type of transportation means that the mobile terminal receives from the user as input.

According to an embodiment of the present invention, the carbon emission amount calculation server may provide a traveling report, configured by correcting the carbon emission amount for each section according to the type of transportation means that the mobile terminal receives from the user as input, to the mobile terminal.

### [Advantageous Effects]

According to the present invention, movement data is collected based on speed and position depending on the transportation means, and it is possible to measure the carbon dioxide emission amount based on the carbon emission coefficient for each transportation means. To this end, through a data preprocessing step, information for each GPS point (location, speed, time) is converted into movement data for each road section (road entry/exit time, average moving speed, road identifier, road length), and this is combined with time information to derive various related data (identification of sudden stop, sudden start, and sudden acceleration sections).

Therefore, the present invention can calculate a carbon emission amount for an entire moving distance on the basis of the carbon emission coefficient for each transportation means, and calculate a total carbon emission amount by correcting carbon emission amount weights for each related data, thereby enabling the measurement of the carbon emission amount without the need to install a separate carbon emission measuring device for each transportation means.

### [Description of Drawings]

FIG. 1 is a view illustrating a carbon emission amount calculation system using transportation data according to an embodiment of the present invention.
FIG. 2 is a flowchart for describing a carbon emission amount calculation method using transportation data according to an embodiment of the present invention.
FIG. 3 is a flowchart for describing a carbon emission amount calculation method using transportation data according to another embodiment of the present invention.

### [Mode for Disclosure]

The present invention may be variously modified and may have various exemplary embodiments, and particular exemplary embodiments illustrated in the drawings will be described in detail below. However, the description of the exemplary embodiments is not intended to limit the present invention to the particular exemplary embodiments, but it should be understood that the present invention is to cover all modifications, equivalents and alternatives falling within the spirit and technical scope of the present invention.

However, in the description of the embodiments, the specific descriptions of related well-known functions or configurations will be omitted when it is determined that the specific descriptions may unnecessarily obscure the subject matter of the present invention. In addition, for the sake of description, the sizes of individual constituent elements in the appended drawings may be exaggeratingly depicted and do not indicate the actual sizes for the applications.

In addition, throughout the specification, when one constituent element is referred to as being "connected" or "accessed" to another constituent element, it may be understood that the one constituent element is either directly connected or directly accessed to the other constituent element. However, unless specifically stated otherwise, it should be understood that the one constituent element may also be connected or accessed via another constituent element in between. In addition, throughout the present specification, unless explicitly described to the contrary, the word "comprise/include" and variations such as "comprises/includes" or "comprising/including" will be understood to imply the inclusion of stated elements, not the exclusion of any other elements.

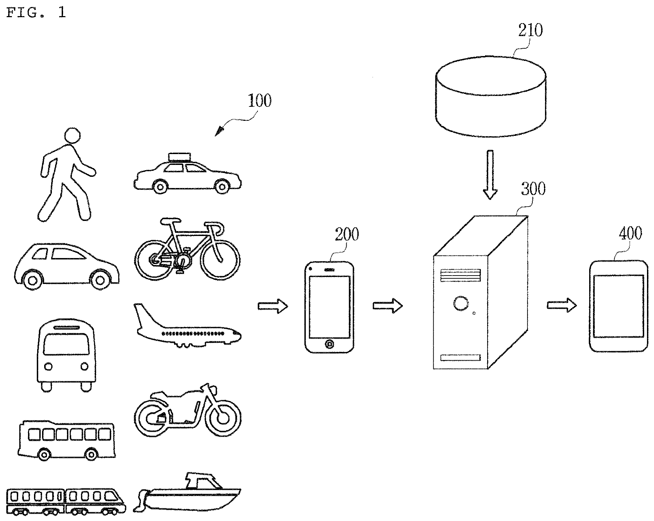

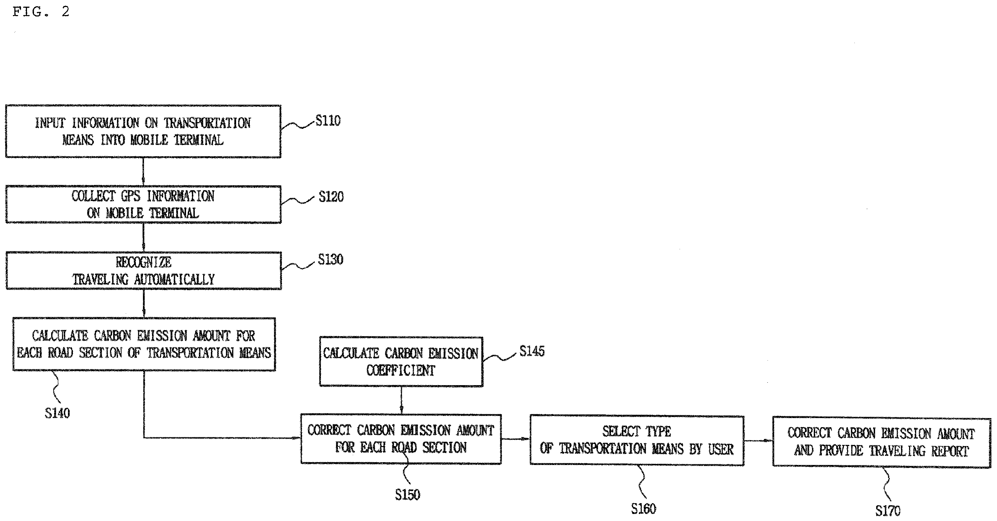

FIG. 1 is a view illustrating a carbon emission amount calculation system using transportation data according to an embodiment of the present invention, and FIG. 2 is a flowchart for describing a carbon emission amount calculation method using transportation data according to an embodiment of the present invention.

Hereinafter, a method and system for calculating a carbon emission amount using transportation data according to an embodiment of the present invention will be described with reference to FIG. 1 and FIG. 2.

A system for calculating a carbon emission amount using transportation data according to an embodiment of the present invention may be configured to include a transportation means 100, a mobile terminal 200, a database 210, and a carbon emission amount calculation server 300.

A user inputs information on a transportation means the user intends to board or use into the mobile terminal 200 (S110).

When the user, carrying the mobile terminal 200 while boarding the transportation means, moves, the GPS of the mobile terminal 200 is collected and stored in the database 210 (S120). The database 210 as described above stores data for each transportation means.

The traveling based on the movement of the mobile terminal 200 carried by the user may be automatically recognized by the carbon emission amount calculation server 300 according to GPS information on the mobile terminal 200 (S130).

**In** this case, the carbon emission amount calculation server 300 may automatically recognize transportation means such as a vehicle, walking, subway, or PM (personal mobility: motorcycle, bicycle, scooter) according to the traveling information recognized.

Subsequently, the carbon emission amount calculation server 300 calculates a carbon emission amount of the transportation means for each section of a road according to the GPS information, on the basis of the data stored in the database for each transportation means (S140).

More specifically, the carbon emission amount calculation server 300 may calculate the carbon emission amount of the transportation means for each section of the road according to the GPS information, on the basis of the data stored in the database 210 for each transportation means, using a carbon emission coefficient for each transportation means.

Meanwhile, the carbon emission amount calculation server 300 may calculate various carbon emission coefficients according to the user's driving habits (S145), and the carbon emission amount calculation server 300 may correct the carbon emission amount of the transportation means for each section of the road using the carbon emission coefficients calculated in this manner (S150).

More specifically, the carbon emission amount calculation server 300 may calculate the carbon emission amount of the transportation means for each section of the road according to the GPS information, on the basis of the data stored in the database 210 for each transportation means, using a carbon emission coefficient for each transportation means. The carbon emission amount calculation server may also correct the carbon emission amount for each section using a carbon emission coefficient for a sudden stop, sudden start, or sudden acceleration calculated based on the GPS information of the transportation means, and provide the corrected carbon emission amount for each section to the mobile terminal.

As described above, according to the present invention, the carbon emission amount may be corrected by calculating a carbon emission coefficient according to the user's driving habits, such as sudden stop, sudden start, or sudden acceleration, or the carbon emission amount may be preprocessed depending on whether the section is congested or whether the economic speed is adhered to, allowing for a more accurate calculation of the carbon emission amount.

**[Table 1]**

| Speed change | Urban status | Economic speed |
|---|---|---|
| Sudden acceleration | Urban | Within 60 to 80 km/h |
| Sudden start | Highway | Exceeding 60 to 80 km/h |
| Sudden stop | | |

As shown in Table 1, the transportation data for each section may be preprocessed according to the identification of sudden stop, sudden start, or sudden acceleration sections.

For example, to correct the carbon emission amount, when the speed change before and after a sudden stop, sudden start, or sudden acceleration is 20 km/h or higher within 5 seconds, the emission conversion coefficient may be preprocessed as emission conversion coefficient = 10 % of emission coefficient. When the conditions for a sudden stop, sudden start, or sudden acceleration are met, the carbon emission amount may be preprocessed as carbon emission amount = corresponding distance traveled (km) × emission conversion coefficient (10 % of the emission coefficient in gCO₂/km). In addition, for congested sections (assumed as urban sections or highway sections for vehicles), when the speed of non-vehicle transportation means (mobility) is the speed limit of 80 km/h or lower, the section is considered congested, and the emission conversion coefficient may be preprocessed as emission conversion coefficient = 10 % of emission coefficient. For vehicles, depending on whether location information on the area traveled is urban or highway traveling, the carbon emission amount according to congested section classification may be adjusted by either adding the corresponding urban traveling distance (km) × emission conversion coefficient (gCO₂/km) for each transportation means, or subtracting the corresponding highway traveling distance (km) × emission conversion coefficient (gCO₂/km) for each transportation means. In addition, according to whether the economic speed is adhered to for each section (speed of 60 to 80 km/h per section), the carbon emission amount may be adjusted by either adding the non-compliant distance of economic speed for each section (km) × 6 % of emission coefficient (gCO₂/km) or subtracting the compliant distance of economic speed for each section (km) × 6 % of emission coefficient (gCO₂/km).

Subsequently, the carbon emission amount calculation server 300 may correct the carbon emission amount for each section according to the type of transportation means input by the user through the mobile terminal 200 and provide the corrected carbon emission amount to the mobile terminal 200 (S160).

In this case, when the user wishes, a transportation means for the traveling information collected by the mobile terminal 200 may be selectively changed, and the carbon emission amount calculation server 300 may receive vehicle information on the selected transportation means through the mobile terminal 200. Accordingly, the carbon emission amount calculation server 300 may calculate the carbon emission amount by multiplying the corrected carbon emission coefficient for each transportation means by the traveling distance configured using the location information and traveling information of the transportation means.

**[Table 2]**

| Vehicle type | Pollutant | CO₂ | |
|---|---|---|---|
| | | Emission coefficient (g/km) | R² |
| Passenger car | Gasoline | 1,777.7×∨^(-0.5151) | 0.97 |
| | Taxi | 1,397.7×v^(-0.5475) | 0.98 |
| Bus | Small-sized (diesel) | 1,103.7×v^(-0.413) | 0.89 |
| | Medium-sized | 0.I251×v^(2)-15.3857×∨+646.05 | 0.84 |
| | Large-sized | City bus 50km/h, 2804.77×v^(-0.3105) | 0.88 |
| | | Vehicle types other than city buses use emission coefficient for large trucks. | |
| Truck | Small-sized (diesel) | 1,073.8×∨^(-0.4009) | 0.86 |
| | Medium-sized | 0.1029×∨^(2)-14.9377×∨+798.9 | 0.89 |
| | Large-sized | 6,240.3×∨^(-0.3829) | 0.97 |

As shown in Table 2, the carbon emission coefficient for each transportation means may be corrected according to the vehicle type of the transportation means.

More specifically, when basic vehicle information (manufacturer, year, model, etc.) from a selection list within an application of the mobile terminal 200 is input into a transportation means selected by default through the mobile terminal 200, the carbon emission amount calculation server 300 may calculate the carbon emission amount according to the traveling information by location, using the carbon emission coefficient for each transportation means. In this case, the carbon dioxide emission amount may be calculated as emission coefficient (gCO₂/km) × traveling distance (km).

In this case, when correcting the carbon emission coefficient for each transportation means, the type of transportation means (car, bus, truck) and emission factor (CO₂) are considered. For cars, the correction is applied as y = 900.6x^(-0.54) for speeds below 79.6 km/h, and y = 1.493x - 26.28 for speeds of 79.6 km/h or higher. For buses, the correction is applied as y = 6338x^(-0.63) across the entire speed range. For trucks, the correction is applied as y = 932.6x^(-0.4626) for speeds below 65.4 km/h, and y = 1.2158x^(1.1317) for speeds of 65.4 km/h or higher.

More specifically, the carbon emission amount calculation server 300 may calculate an average carbon emission amount, which is an average value (g/km) calculated by dividing the sum of greenhouse gas emission amount of all vehicles sold by an automobile manufacturer by the number of vehicles sold. Alternatively, the server may calculate a carbon emission allowance standard, which is a standard (g/km) for an average carbon dioxide (CO₂) emission amount that the automobile manufacturer must comply with. Additionally, the server may preprocess a vehicle group into the same vehicle type, divided by manufacturer, model, year, fuel type, etc., where energy consumption efficiency and greenhouse gas emission amount of the vehicle group are expected to be similar depending on the structure and characteristics of the vehicle, and then correct the carbon emission coefficient for each transportation means accordingly.

Accordingly, the carbon emission amount calculation server 300 may provide a traveling report, configured by correcting the carbon emission amount for each section according to the type of transportation means input by the user through the mobile terminal 200, to the mobile terminal 200 (S170).

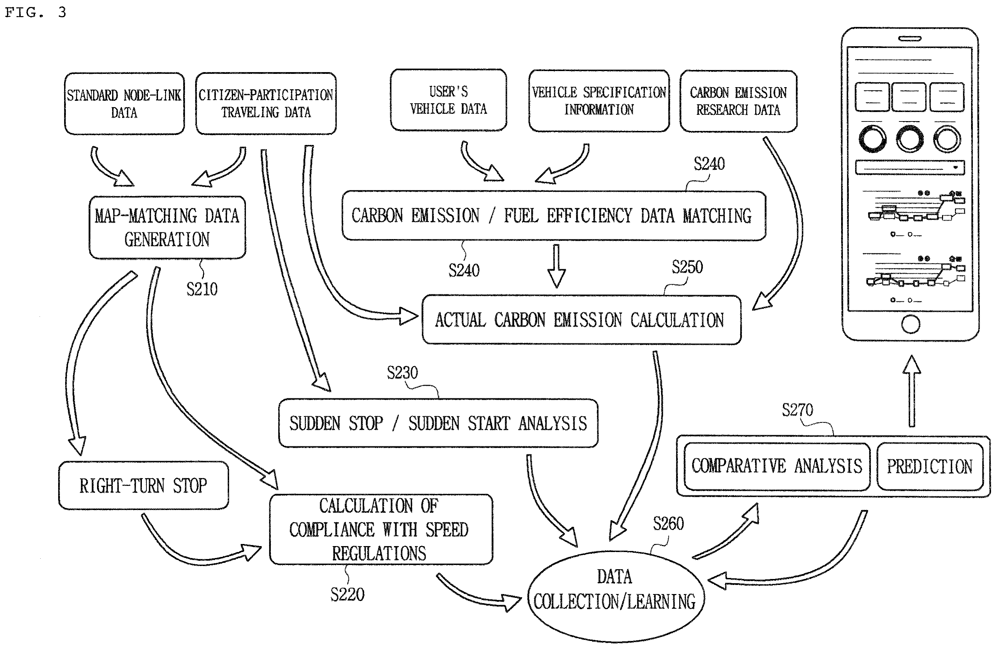

FIG. 3 is a flowchart for describing a carbon emission amount calculation method using transportation data according to another embodiment of the present invention.

Hereinafter, a method of calculating a carbon emission amount using transportation data according to another embodiment of the present invention will be described with reference to FIG. 3.

First, the database stores map-matching data generated using data such as standard node-link data and citizen-participation traveling data (S210), and the carbon emission amount calculation server may calculate information such as right-turn stops or compliance with speed regulations (S220). In addition, the carbon emission amount calculation server may analyze sudden stops or sudden starts using the data (S230).

**In** addition, the carbon emission amount calculation server may collect citizen-participation traveling data, the user's vehicle data, and vehicle specification information from the user's mobile terminal, match the carbon emission amount with fuel efficiency data (S240), and calculate the carbon emission amount by referencing carbon emission data (S250).

The carbon emission amount calculation server may collect and learn from the data calculated in this manner (S260). After calculating the carbon emission amount for the corresponding transportation means through comparative analysis based on this learning, the server may visualize and provide the result through the traveling report (S270).

As described above, according to the present invention, movement data is collected based on speed and position depending on the transportation means, and it is possible to measure the carbon dioxide emission amount based on the carbon emission coefficient for each transportation means. To this end, through a data preprocessing step, information for each GPS point (location, speed, time) can be converted into movement data for each road section (road entry/exit time, average moving speed, road identifier, road length), and this can be combined with time information to derive various related data (identification of sudden stop, sudden start, and sudden acceleration sections).

Therefore, the present invention can calculate a carbon emission amount for an entire moving distance on the basis of the carbon emission coefficient for each transportation means, and calculate a total carbon emission amount by correcting carbon emission amount weights for each related data, thereby enabling the measurement of the carbon emission amount without the need to install a separate carbon emission measuring device for each transportation means.

The detailed description of the present invention as described above has described specific embodiments. However, various modifications are possible without departing from the scope of the present invention. The technical spirit of the present invention should not be limited to the aforementioned embodiments but should be defined by not only the claims to be described below, but also those equivalent to the claims.

## Claims

1. A method of calculating a carbon emission amount using transportation data, comprising:
a first step in which a database collects and stores GPS information on a mobile terminal of a user who has boarded a transportation means;
a second step in which a carbon emission amount calculation server calculates the carbon emission amount of the transportation means for each section of a road according to the GPS information on the basis of data stored in the database for each transportation means; and
a third step in which the carbon emission amount calculation server corrects the carbon emission amount for each section according to a change in speed calculated using the GPS information of the transportation means, and provides the corrected carbon emission amount for each section to the mobile terminal.

2. The method of claim 1, wherein in the second step, the carbon emission amount calculation server calculates the carbon emission amount of the transportation means for each section of a road according to the GPS information using a carbon emission coefficient for each transportation means on the basis of the data stored in the database for each transportation means.

3. The method of claim 1, wherein in the third step, the carbon emission amount calculation server corrects the carbon emission amount for each section using a carbon emission coefficient for a sudden stop, a sudden start, or sudden acceleration calculated using on the GPS information of the transportation means, and provides the corrected carbon emission amount for each section to the mobile terminal.

4. The method of claim 1, further comprising:
a fourth step in which the carbon emission amount calculation server corrects the carbon emission amount for each section according to a type of transportation means input by the user through the mobile terminal.

5. The method of claim 4, wherein in the fourth step, the carbon emission amount calculation server provides a traveling report, configured by correcting the carbon emission amount for each section according to the type of transportation means input by the user through the mobile terminal, to the mobile terminal.

6. A system for calculating a carbon emission amount using transportation data, comprising:
a database configured to store data for each transportation means and collects and stores GPS information on a mobile terminal of a user who has boarded a transportation means;
a carbon emission amount calculation server configured to calculate the carbon emission amount of the transportation means for each section of a road according to the GPS information on the basis of data stored in the database for each transportation means, correct the carbon emission amount for each section according to a change in speed calculated using the GPS information of the transportation means, and provide the corrected carbon emission amount for each section to the mobile terminal.

7. The system of claim 6, wherein the carbon emission amount calculation server calculates the carbon emission amount of the transportation means for each section of a road according to the GPS information using a carbon emission coefficient for each transportation means on the basis of the data stored in the database for each transportation means.

8. The system of claim 6, wherein the carbon emission amount calculation server corrects the carbon emission amount for each section using a carbon emission coefficient for a sudden stop, a sudden start, or sudden acceleration calculated using on the GPS information of the transportation means, and provides the corrected carbon emission amount for each section to the mobile terminal.

9. The system of claim 6, wherein the carbon emission amount calculation server corrects the carbon emission amount for each section according to a type of transportation means that the mobile terminal receives from the user as input.

10. The system of claim 9, wherein the carbon emission amount calculation server provides a traveling report, configured by correcting the carbon emission amount for each section according to the type of transportation means that the mobile terminal receives from the user as input, to the mobile terminal.
